# EUROPÄISCHE PATENTSCHRIFT

(11) **EP 3 259 108 B1**
(45) Veröffentlichungstag und Bekanntmachung des Hinweises auf die Patenterteilung: **23.01.2019**
(21) Anmeldenummer: 16705161.4
(22) Anmeldetag: 18.02.2016
(51) Int. Cl.: B29C 45/14, B32B 27/08, B32B 27/20, B32B 27/30, B32B 5/16, B32B 7/02, B32B 25/08, B32B 25/14, B32B 27/18, B32B 27/14, B29K 25/00

(54) **BAUTEIL AUS THERMOPLASTISCHEM VERBUNDMATERIAL MIT ERHÖHTE KERBSCHLAGFESTIGKEIT**
COMPONENT MADE OF THERMOPLASTIC COMPOSITE MATERIAL WITH INCREASED NOTCHED BAR IMPACT STRENGTH
COMPOSANT À BASE DE MATÉRIAU COMPOSITE THERMOPLASTIQUE À MEILLEURE RÉSISTANCE AU CHOC APRÈS ENTAILLE

(30) Priorität: 19.02.2015 EP 15155697
(43) Veröffentlichungstag der Anmeldung: 27.12.2017
(73) Patentinhaber: INEOS Styrolution Group GmbH, 60325 Frankfurt (DE)
(72) Erfinder: BERNHARDT, Achim, 63512 Hainburg (DE); JAHNKE, Eike, 1180 Aubonne (CH); BLINZLER, Marko, 68199 Mannheim (DE); RÖTTEL, Stefan, 51643 Gummersbach (DE); NIESSNER, Norbert, 67159 Friedelsheim (DE)
(74) Vertreter: Jacobi, Markus Alexander
(86) Internationale Anmeldenummer: PCT/EP2016/053414
(87) Internationale Veröffentlichungsnummer: WO 2016/131899

(56) Entgegenhaltungen:
- EP-A1- 0 669 367
- EP-A1- 0 728 576
- WO-A1-2008/110539
- US-A1- 2009 110 855

## Beschreibung

Die vorliegende Erfindung betrifft ein Bauteil aus thermoplastischem Verbundmaterial, enthaltend einen Kern K und mindestens eine Beschichtung G, wobei die Beschichtung G zumindest teilweise den Kern K umschließt. Weiterhin betrifft die Erfindung ein Verfahren zur Herstellung des Bauteils.

Die Herstellung von thermoplastischen Formmassen mit verschiedenen Füllstoffen ist bekannt. Beispielsweise wird in US 3,951,906 eine Zusammensetzung mit Glasfasern offenbart. Glasfaserverstärkte Formmassen weisen üblicherweise eine erhöhte Steifigkeit und Festigkeit auf, wobei die Elastizität und Kerbschlagfestigkeit deutlich reduziert werden.

WO 2008/110539 beschreibt Faserverbundwerkstoffe, enthaltend 15 bis 95 Gew.-%, bezogen auf das Gewicht des Faserverbundwerkstoffs, einer thermoplastischen Matrix, umfassend 0 bis 99 Gew.-%, bezogen auf das Gewicht der thermoplastischen Matrix, eines Styrol-Acrylnitril-Copolymeren und/oder eines α-Methylstyrol-Acrylnitril-Copolymeren als Komponente A, sowie 1 bis 100 Gew.-%, bezogen auf das Gewicht der thermoplastischen Matrix, eines Styrol-Acrylnitril-Maleinsäureanhydrid-Copolymeren und/oder eines α-Methylstyrol-Acrylnitril-Maleinsäureanhydrid-Copolymeren als Komponente B, sowie 0 bis 50 Gew.-%, eines kautschukelastischen Polymers als Komponente C, sowie 0 bis 50 Gew.-%, bezogen auf das Gewicht der thermoplastischen Matrix, kunststoffüblicher Zusatzstoffe als Komponente D, wobei die Summe der Komponenten A, B, C und D 100 Gew.-% ergibt, und 5 bis 85 Gew.-%, bezogen auf das Gewicht des Faserverbundwerkstoffs, Glasfasern G, wobei die Summe der thermoplastischen Matrix und der Glasfasern G 100 Gew.-% ergibt, sowie Verfahren zur Herstellung von Faserverbundwerkstoffen.

DE-A 34 36 602 beschreibt glasfaserverstärkte thermoplastische Formmassen bestehend aus einem Styrolpolymer A, enthaltend Acrylnitril und Methacrylate, einem Styrolpolymer B, enthaltend Acrylnitrilmaleinsäureimide und einem Styrol enthaltenden Polymer C, enthaltend Acrylnitril, und eine Kautschukkomponente D. Die physikalischen Eigenschaften der Polymermischung zeigen, dass die Haftung zwischen den Glasfasern und der Copolymere unzureichend ist.

US 6,211,269 beschreibt die Verwendung von zinnhaltigen organischen Verbindungen zur Verbesserung der Haftung zwischen Glasfasern und einer Acrylnitril-Butadien-Styrol (ABS)-Zusammensetzung.

US 5,039,719 offenbart den Einsatz von Maleinsäureanhydrid enthaltenden Copolymeren oder thermoplastischen Polyurethanen, enthaltend Isocyanatgruppen, zur Verbesserung der Haftung zwischen Glasfasern und einem ABS-Copolymer.

Die Anmeldung JP H 04104922 offenbart einen Binder für Glasfasern enthaltendes Copolymer.

WO 2008/119678 beschreibt eine glasfaserverstärkte Acrylnitril-Butadien-Styrol-Zusammensetzung mit verbesserter Steifheit und Zähigkeit. Es ist eine thermoplastische Formmasse mit folgender Zusammensetzung genannt: 5 - 95 % eines Copolymers A bestehend aus: 70 - 76 % eines vinylaromatischen Monomers A1, 24 - 30 % einer Vinylcyanitmonomerkomponente A2 und 0 - 50 % eines oder mehrerer ungesättigten copolymerisierbaren Monomers A3, 0 - 60 % einer Kautschukkomponente B und 5 - 50 % dünner Glasfasern C, wobei die thermoplastische Formmasse mit Spritzguss verarbeitbar ist.

US 4,745,139 hat eine Zusammensetzung zur Oberflächenbeschichtung beispielsweise von Elastomeren und Kunststoffschäumen zum Gegenstand. Die Zusammensetzung enthält Styrol-Ethylen-Butylen-Styrol und Methyl-Methacrylat-Copolymere sowie pulverförmige Siliziumdioxide und Microglaskugeln als Füllmaterial. Die Zusammensetzung zur Oberflächenbeschichtung ermöglicht eine gleichmäßige Rauigkeit und Rutschfestigkeit der beschichteten Oberfläche.

In JP H 0423851 und JP H 0423849 sind Styrol-basierte Harzzusammensetzungen offenbart, die Kohlenstofffasern und Glashohlkugeln als Füllstoffe enthalten. Die Zusammensetzungen enthalten 60 Gew.-% bis 90 Gew.-% Styrol-basiertes Harz wie ABS und 10 Gew.-% bis 40 Gew.-% anorganisches Füllmaterial, zusammengesetzt aus 20 Gew.-% bis 80 Gew.-% Kohlenstofffasern und 20 Gew.-% bis 80 Gew.-% Glaskugeln. ABS-Formmassen mit Glashohlkugeln werden in der JP H 0423848 beschrieben.

EP 0 728 576 A1 betrifft einen transparenten, harten Verbundwerkstoff, enthaltend zwei thermoplastische Folien oder Platten, vorzugsweise aus Polycarbonat, und darin eingebettet, ein transparentes thermoplastisches Harz als verstärkendes Füllmaterial. Das thermoplastische Harz, vorzugsweise ein Polycarbonat oder ein Methylmethacrylat/Styrol-Copolymer, enthält als Füllmaterial dispergiertes Glas, insbesondere in Form von Glasfasern.

Aus dem Stand der Technik bekannte, Formkörper enthaltende thermoplastische Formmassen, insbesondere Formmassen, die durch enthaltenes Glas und/oder Hohlkugeln eine geringere Dichte aufweisen, besitzen eine nur geringe Kerbschlagfestigkeit, so dass die Anwendungsmöglichkeiten dieser Formmassen eingeschränkt sind.

Eine Aufgabe der vorliegenden Erfindung ist es, ein Bauteil aus einer Formmasse, enthaltend Formkörper als Füllstoffe, bereitzustellen, das eine erhöhte Kerbschlagfestigkeit aufweist.

Die Aufgabe wird gelöst durch ein Bauteil aus thermoplastischem Verbundmaterial, enthaltend einen Kern K und mindestens eine Beschichtung G, wobei:
die Beschichtung G zumindest teilweise den Kern K umschließt,
der Kern K aus einer ersten thermoplastischen Formmasse M1 hergestellt ist,
   wobei die erste thermoplastische Formmasse M1 mehrere Formkörper F enthält und die Beschichtung G aus einer zweiten thermoplastischen Formmasse M2 hergestellt ist, die Dicke des Kerns K um einen Faktor von mindestens 1,2 und nicht mehr als 20 größer ist als die Dicke der Beschichtung G, wobei jeweils die größte Dicke, bezogen auf das gesamte Bauteil, anzunehmen ist;
   die Formkörper F Hohlkörper sind und insbesondere ein Verhältnis des mittleren Außendurchmessers der Formkörper F zur mittleren Wandstärke der Formkörper F von 2,05 bis 10 aufweisen;
die zweite thermoplastische Formmasse M2 eine höhere Kerbschlagfestigkeit (DIN EN ISO 179-1) aufweist als die erste thermoplastische Formmasse M1;
die Dichte der ersten thermoplastischen Formmasse M1 von 0,7 bis 1 g/cm³ beträgt, und die thermoplastische Formmasse M1 enthält:
   A) mindestens 50 Gew.-% eines Styrol-Acrylnitril-Copolymers als Komponente A,
   B) 0 - 10 Gew.-% eines Pfropfpolymers als Komponente B umfassend:
      B1: eine Pfropfgrundlage aufgebaut aus einem Acrylsäurealkylester, einem Allyl(meth)acrylat, einem copolymerisierbaren Monomer und/oder einem Dien-Monomer,
      B2: mindestens eine Pfropfhülle aufbaut aus mindestens einem vinylaromatischen Monomer und/oder einem copolymerisierbaren Monomer,
   C) 0,5 - 8 Gew.-% eines weiteren Copolymers als Verträglichkeitsvermittler als Komponente C,
   D) 5 - 30 Gew.-%, oftmals 5 - 25 Gew.-% Formkörper F als Komponente D,
   E) 0,1 bis 4 Gew.-% an Stabilisator(en) als Komponente E;
wobei die Summe der Komponenten A, B, C, D und E 100 Gew.-% ergibt.

Die thermoplastische Formmasse M1 basiert auf (mindestens) einem Styrol-Acrylnitril-Copolymer und den Formkörpern F.

Durch die Beschichtung G auf dem Kern K, der die Formkörper F enthält, wird ein Verbundmaterial gebildet, wobei die Beschichtung G dem Bauteil eine erhöhte Kerbschlagfestigkeit verleiht und somit ein Splittern beim Bruch des Bauteils vermindert wird. Die Beschichtung G ermöglicht die erhöhte Kerbschlagfestigkeit als zusätzliche Eigenschaft, wobei weitere Eigenschaften der ersten thermoplastischen Formmasse M1 alleine, wie beispielsweise eine geringe Dichte, weitestgehend auch für das Bauteil aus dem Verbundmaterial, umfassend den Kern K und die Beschichtung G, erhalten bleiben. Die Beschichtung G kann auch als Schutzschicht für das Bauteil verstanden werden. Insbesondere im Bereich der Automobilherstellung kann somit höheren Anforderungen zum Bruchverhalten von Werkstoffen, beispielsweise für eine Verwendung im Innenraum eines Fahrzeugs, entsprochen werden. Durch die erhöhte Kerbschlagfestigkeit und die geringere Neigung zum Splittern können die erfindungsgemäßen Bauteile beispielsweise im Kopfaufprallbereich im Innenraum von Fahrzeugen eingesetzt werden.

Durch das Vorhandensein der Beschichtung G auf dem Kern K kann außerdem eine glattere Oberfläche des Bauteils erreicht werden.

Der Begriff "Kern" wird im Sinne der vorliegenden Erfindung dahingehend verstanden, dass das Bauteil bevorzugt im Wesentlichen, also zu mehr als 40 Gew.-%, mehr bevorzugt zu mehr als 50 Gew.-%, oftmals 85 Gew.-% oder mehr, bezogen auf die Gesamtmasse des Bauteils, aus dem Kern K und aus der ersten thermoplastischen Formmasse M1 besteht. Auf dem Kern K ist die Beschichtung G angeordnet, wobei die Dicke des Kerns K bevorzugt größer ist als die Dicke der Beschichtung G.

Die Dicke des Kerns K ist um einen Faktor von mindestens 1,2 und nicht mehr als 20 größer als die Dicke der Beschichtung G, wobei jeweils die größte Dicke, bezogen auf das gesamte Bauteil, anzunehmen ist. Der Kern K besteht aus der ersten thermoplastischen Formmasse M1 und die Beschichtung G aus der zweiten thermoplastischen Formmasse M2.

Bevorzugt enthält das Bauteil zu 5 Gew.-% bis 30 Gew.-%, mehr bevorzugt zu 20 Gew.-% bis 30 Gew.-% und insbesondere bevorzugt zu 23 bis 27 Gew.-%, bezogen auf die Masse des gesamten Bauteils, die zweite thermoplastische Formmasse M2.

Eine resultierende, im Vergleich zu beispielsweise Lackschichten große Dicke der Beschichtung G ist vorteilhaft, um mechanische Kräfte aufnehmen zu können und somit die Kerbschlagfestigkeit des Bauteils zu erhöhen. Die Beschichtung G wirkt stabilisierend.

Die Formkörper F sind Hohlkörper. Ein Hohlkörper weist einen Hohlraum in seinem Inneren auf, der von der Umgebung des Hohlkörpers abgeschlossen ist. Der Hohlkörper kann in dem Hohlraum ein Gas, wie Luft oder Stickstoff enthalten, und es kann in dem Hohlraum des Hohlkörpers im Vergleich zur Umgebung des Hohlkörpers ein Unterdruck vorliegen.

Die Hohlkörper weisen ein Verhältnis des mittleren größten Außendurchmessers der Hohlkörper zur mittleren kleinsten Wandstärke der Hohlkörper von 2,05 bis 10, mehr bevorzugt von 2,1 bis 5, weiter bevorzugt von 2,2 bis 4, besonders bevorzugt von 2,3 bis 3 und insbesondere bevorzugt von 2,4 bis 2,8, beispielsweise 2,6, auf.

Die Wandstärke beschreibt die Materialdicke zwischen dem Hohlraum und der Umgebung der Formkörper F. In der ersten thermoplastischen Formmasse M1 sind mehrere Formkörper F, also mehr als nur ein Formkörper F, enthalten und der mittlere größte Außendurchmesser und die mittlere kleinste Wandstärke bezeichnen jeweils das arithmetische Mittel, bezogen auf die in der ersten thermoplastischen Formmasse M1 enthaltenen Formkörper F. Die kleinste Wandstärke und der größte Außendurchmesser beziehen sich jeweils auf den einzelnen Formkörper F. Durch das Verhältnis von Außendurchmesser zu Wandstärke ist gewährleistet, dass eine Reduktion der Dichte der ersten thermoplastischen Formmasse M1 und gleichzeitig die nötige Stabilität der einzelnen Formkörper gegeben sind.

Wenn die Formkörper F als Hohlkörper ausgeführt sind, kann die Dichte der ersten thermoplastischen Formmasse M1 durch Anwesenheit der Formkörper F reduziert werden und das Bauteil ist für Leichtbauanwendungen einsetzbar. Auf diese Weise kann beispielsweise das Gesamtgewicht von Einbauten in einem Fahrzeug und somit der Treibstoffverbrauch reduziert werden.

Bevorzugt bestehen die Formkörper F zu mindestens 60 Gew.-%, mehr bevorzugt zu mindestens 80 Gew.-%, besonders bevorzugt zu mindestens 90 Gew.-% und insbesondere bevorzugt zu mindestens 95 Gew.-% aus Glas, bezogen auf die Masse der Formkörper F.
Im Rahmen der Erfindung wird Glas als polymerisiertes Silikat betrachtet, so dass auch der Begriff Polymerisierung bei der Herstellung und Verformung von Glas zutreffend ist.

Die Verwendung von Glas für die Formkörper F hat den Vorteil, dass die Formkörper F bei der Verarbeitung der ersten thermoplastischen Formmasse M1 formstabil sind, so dass gegebenenfalls der Hohlraum in dem Formkörper F erhalten bleibt und insgesamt eine geringe Dichte der ersten thermoplastischen Formmasse M1 erzielt wird.

In einer alternativen Ausführungsform bestehen die Formkörper F zu mindestens 60 Gew.-%, mehr bevorzugt zu mindestens 80 Gew.-%, besonders bevorzugt zu mindestens 90 Gew.-% und insbesondere bevorzugt zu mindestens 95 Gew.-% aus einem (thermoplastischen) Kunststoff, bezogen auf die Masse der Formkörper F. Der Kunststoff ist bevorzugt ausgewählt aus der Gruppe bestehend aus unvernetzten Polymeren wie Polystyrol (PS), und vernetzten Polymeren wie Polymethylmethacrylat/Polystyrol-Copolymere und Polycarbonat. Besonders bevorzugt sind vernetzte Polymere, die insbesondere PS/PMMA-basiert sind.

Bevorzugt sind die Formkörper F kugelförmig. Unter dem Begriff kugelförmig werden im Sinne der Erfindung auch Formen verstanden, die leicht von der Kugelform abweichen wie Ellipsoide. Die Formkörper F weisen bevorzugt eine längste räumliche Ausdehnung in einem Bereich von 1 µm bis 1000 µm auf, mehr bevorzugt von 2 µm bis 200 µm, besonders bevorzugt von 2 µm bis 100 µm und insbesondere bevorzugt von 5 µm bis 50 µm. Die längste räumliche Ausdehnung der Formkörper F bezieht sich auf die arithmetisch mittlere längste räumliche Ausdehnung über die Gesamtheit der Formkörper F in der ersten thermoplastischen Formmasse M1.

Die erste thermoplastische Formmasse M1 besteht zu 5 Gew.-% bis 30 Gew.-% aus den Formkörpern F, bezogen auf die Gesamtmasse der ersten thermoplastischen Formmasse M1.

Die Dichte der ersten thermoplastischen Formmasse M1 beträgt 0,7 g/cm³ bis 1 g/cm³, bevorzugt 0,7 g/cm³ bis 0,9 g/cm³ und insbesondere bevorzugt 0,7 g/cm³ bis 0,8 g/cm³.

Die verhältnismäßig geringe Dichte der ersten thermoplastischen Formmasse M1 ermöglicht den Einsatz des Bauteils in Leichtbauanwendungen. Dies sind insbesondere mobile Anwendungen, beispielsweise im Fahrzeugbau.

Die zweite thermoplastische Formmasse M2 weist eine höhere Kerbschlagfestigkeit, bestimmbar nach DIN EN ISO 179-1, als die erste thermoplastische Formmasse M1 auf. Diese kann z. B. mindestens 10 % höher sein. Die Anwesenheit der zweiten thermoplastischen Formmasse M2 auf der ersten thermoplastischen Formmasse M1 führt zu einer erhöhten Kerbschlagfestigkeit des gesamten Bauteils.

Die Beschichtung G kann insbesondere eine Folie, eine Platte oder ein zweites Bauteil sein. Besonders bevorzugt ist, wenn die zweite thermoplastische Formmasse M2 in Form einer Folie vorliegt. Mit einem zweiten Bauteil ist in diesem Zusammenhang beispielsweise gemeint, dass die zweite thermoplastische Formmasse M2 als formstabile Folie bereits zugeschnitten ist und eine dreidimensional festgelegte Form aufweist, bevor die zweite thermoplastische Formmasse M2 als Beschichtung G mit dem Kern K aus der ersten thermoplastischen Formmasse M1 zu dem Verbundmaterial zusammengefügt wird.

In einer bevorzugten Ausführungsform umfasst das Bauteil zusätzlich zu dem Kern K und der Beschichtung G eine weitere Schicht S, die aus einer dritten thermoplastischen Formmasse M3 aufgebaut ist, die eine höhere Kerbschlagfestigkeit aufweist als die erste thermoplastische Formmasse M1, wobei der Kern K zwischen der Beschichtung G und der weiteren Schicht S angeordnet ist. Bevorzugt ist der Kern K vollständig von der Beschichtung G oder der Beschichtung G und der weiteren Schicht S umschlossen.

Liegt die weitere Schicht S vor, so umfasst das Bauteil einen Schichtaufbau, enthaltend die Beschichtung G, den Kern K und die weitere Schicht S. Bevorzugt besteht das Bauteil aus dem Kern K und der Beschichtung G oder aus dem Kern K, der Beschichtung G und der weiteren Schicht S.

Wie für den Fall, dass das Bauteil keine weitere Schicht S umfasst, enthält das Bauteil auch für den Fall, dass das Bauteil die weitere Schicht S umfasst, bevorzugt zu 5 Gew.-% bis 30 Gew.-%, mehr bevorzugt zu 20 Gew.-% bis 30 Gew.-% und insbesondere bevorzugt zu 23 bis 27 Gew.-%, bezogen auf die Masse des gesamten Bauteils, die zweite thermoplastische Formmasse M2. Umfasst das Bauteil die weitere Schicht S, so wird die Masse der weiteren Schicht S in der Masse des gesamten Bauteils berücksichtigt.

Entsprechend enthält das Bauteil, wenn die weitere Schicht S umfasst ist, bevorzugt zu 5 Gew.-% bis 30 Gew.-%, mehr bevorzugt zu 20 Gew.-% bis 30 Gew.-% und insbesondere bevorzugt zu 23 bis 27 Gew.-% die dritte thermoplastische Formmasse M3.

Im Allgemeinen sind lediglich in der ersten thermoplastischen Formmasse M1 die Formkörper F enthalten, während die zweite thermoplastische Formmasse M2 und die dritte thermoplastische Formmasse M3 keine Formkörper F enthalten.

Die Zusammensetzung der dritten Formmasse M3 kann identisch zur Zusammensetzung der zweiten thermoplastischen Formmasse M2 sein. Alternativ können die Zusammensetzungen der dritten thermoplastischen Formmasse M3 und der zweiten thermoplastischen Formmasse M2 voneinander abweichen. Der letztgenannte Fall ist vorteilhaft, wenn an verschiedenen Seiten des Bauteils eine unterschiedliche Oberflächenbeschaffenheit gewünscht wird.

Bevorzugt besteht die erste thermoplastische Formmasse M1 aus einer Polymermatrix aus Styrol-Acrylnitril-Copolymer und den Formkörpern F. In einem erfindungsgemäßen Bauteil können die Zusammensetzung der Polymermatrix der ersten thermoplastischen Formmasse M1, die Zusammensetzung der zweiten thermoplastischen Formmasse M2 und die Zusammensetzung der dritten thermoplastischen Formmasse M3 identisch sein oder von einander abweichen. Die zweite thermoplastische Formmasse M2 und die dritte thermoplastische Formmasse M3 enthalten jeweils bevorzugt Polymere oder Copolymere ausgewählt aus der Gruppe bestehend aus Polystyrol (PS), StyrolButadien-Kautschuk (SB), Styrol-Acrylnitril (SAN), Styrolmethacrylsäuremethylester (SMMA), Acrylnitril-Butadien-Styrol (ABS), Acrylnitril-Butadien-Styrol/Polyamid (ABS/PA), Acrylnitril-Butadien-Styrol/Polycarbonat (ABS/PC), Acrylnitril-Butadien-Styrol/Polymethylmethacrylat (ABS/PMMA), Acrylnitril-Butadien-Styrol/ Styrolmethacrylsäuremethylester (ABS/SMMA), Acrylester-Styrol-Acrylnitril (ASA), Acrylester-Styrol-Acrylnitril /Polyamid (ASA/PA), Acrylester-Styrol-Acrylnitril/Polycarbonat (ASA/PC), Acrylester-Styrol-Acrylnitril/Polymethylmethacrylat (ASA/PMMA), Acrylester-Styrol-Acrylnitril/Styrolmethacrylsäuremethylester (ASA/SMMA) und Mischungen daraus.

Im Allgemeinen sind die Zusammensetzungen, die im Folgenden für die Polymermatrix der ersten thermoplastischen Formmasse M1 beschrieben sind, auch als Zusammensetzungen der zweiten thermoplastischen Formmasse M2 und der dritten thermoplastischen Formmasse M3 geeignet. Weiter bevorzugt weisen die Polymermatrix der ersten thermoplastischen Formmasse M1 und die zweite thermoplastische Formmasse M2 eine identische Zusammensetzung (z.B. SAN, ABS oder ASA) auf. Ein Vorteil dieser Ausführungsform besteht darin, dass eine gute Haftung zwischen dem Kern K und der Beschichtung G erzielt wird und auf den Einsatz zusätzlicher Verträglichkeitsvermittler zwischen Kern K und Beschichtung G verzichtet werden kann. Der Begriff Polymermatrix der ersten thermoplastischen Formmasse M1 bezeichnet den Teil der ersten thermoplastischen Formmasse M1, der nicht aus den Formkörpern F besteht. Alternativ können die Polymermatrix der ersten thermoplastischen Formmasse M1 und die zweite thermoplastische Formmasse M2 in ihrer Zusammensetzung voneinander abweichen.

Bevorzugt ist die Beschichtung G in direktem Kontakt zu dem Kern K angeordnet und gegebenenfalls ist die weitere Schicht S in direktem Kontakt zu dem Kern K angeordnet. Entsprechend ist in diesem Fall die Beschichtung G flächig mit dem Kern K verbunden und gegebenenfalls ist die weitere Schicht S flächig mit dem Kern K verbunden. Im Allgemeinen berühren sich die Beschichtung G und die weitere Schicht S lediglich mit einer Fläche, die nicht breiter ist als die Dicke der Beschichtung G und die Dicke der weiteren Schicht S. In einer alternativen Ausführungsform sind die Beschichtung G und die weitere Schicht S ohne gegenseitige Berührungspunkte auf dem Kern K angeordnet.

Die Beschichtung G und/oder die weitere Schicht S bilden bevorzugt eine äußere Oberfläche des Bauteils. In dieser Ausführungsform zeigt eine Seite der Beschichtung G in Richtung des Kerns K und eine zweite, gegenüberliegende Seite der Beschichtung G zur Umgebung des Bauteils. Gleiches gilt gegebenenfalls entsprechend für die weitere Schicht S.

In einer alternativen Ausführungsform ist auf der Beschichtung G beziehungsweise auf der weiteren Schicht S eine ergänzende Schicht auf der dem Kern abgewandten Seite der Beschichtung G beziehungsweise der weiteren Schicht S angeordnet, so kann beispielsweise zusätzlich eine Lackschicht aufgebracht werden. Die mittlere Dicke der ergänzenden Schicht ist bevorzugt kleiner als die mittlere Dicke der Beschichtung G und die mittlere Dicke der weiteren Schicht S.

Die erste thermoplastische Formmasse M1 enthält mindestens 50 Gew.-%, insbesondere 50 Gew.-% bis 70 Gew.-% eines Styrol- Acrylnitril-Copolymers. Bevorzugt enthält die erste thermoplastische Formmasse M1 mindestens 50 Gew.-% eines kautschukmodifizierten Styrolacrylnitrilcopolymers, wobei die Kautschukkomponente auf einem Acrylat-Kautschuk oder auf einem Polybutadien (PB) basiert. Weiter bevorzugt enthalten die zweite thermoplastische Formmasse M2 und die dritte thermoplastische Formmasse M3 50 Gew.-% bis 95 Gew.-%, insbesondere 50 Gew.-% bis 70 Gew.-% eines Polystyrols oder eines Styrolcopolymers, insbesondere 50 Gew.-% bis 95 Gew.-% eines kautschukmodifizierten Styrolacrylnitrilcopolymers, wobei die Kautschukkomponente auf einem Acrylat-Kautschuk oder auf einem Polybutadien (PB) basiert.

Es ist bevorzugt, dass die erste thermoplastische Formmasse M1 0,5 Gew.-% bis 5 Gew.-%, mehr bevorzugt 1 Gew.-% bis 5 Gew.-% und insbesondere bevorzugt 2 Gew.-% bis 5 Gew.-% eines Verträglichkeitsvermittlers enthält, wobei der Verträglichkeitsvermittler mindestens ein Styrol-Acrylnitril-Maleinsäureanhydrid-Copolymer umfasst, wobei dieses 0,5 Gew.-% bis 30 Gew.-%, mehr bevorzugt 1 Gew.-% bis 5 Gew.-% von Maleinsäureanhydrid abgeleiteten Einheiten aufweist. Bevorzugt beträgt dieser Maleinsäureanhydrid-Anteil 1 Gew.-% bis 3 Gew.-%, insbesondere 2,0 Gew.-% bis 2,2 Gew.-%.

Der Verträglichkeitsvermittler dient zur besseren Anhaftung der Polymermatrix auf den Formkörpern F in der ersten thermoplastischen Formmasse M1. Durch eine verbesserte Haftung zwischen der Polymermatrix und den Formkörpern F weist bereits die erste thermoplastische Formmasse M1 mit Verträglichkeitsvermittler eine höhere Zähigkeit auf im Vergleich zu einer ersten thermoplastischen Formmasse M1, die keinen Verträglichkeitsvermittler enthält. Auf diese Weise wird auch die Zähigkeit des gesamten Bauteils erhöht. Bevorzugt enthält der Verträglichkeitsvermittler SAN und Maleinsäureanhydrid. Weiterhin bevorzugt enthält der Verträglichkeitsvermittler 70 Gew.-% bis 80 Gew.-% Styrolmonomere, 20 Gew.-% bis 30 Gew.-% Acrylnitrilmonomere und 1 Gew.-% bis 5 Gew.-% Maleinsäureanhydrid, bezogen auf die Gesamtmasse des Verträglichkeitsvermittlers. Alternativ zum Maleinsäureanhydrid kann der Verträglichkeitsvermittler Polymere mit funktionellen Gruppen wie Epoxy- oder Imid-Gruppen aufweisen.

Die erste thermoplastische Formmasse M1 enthält (bzw. besteht aus):
A) mindestens 50 Gew.-% eines Styrol-Acrylnitril-Copolymers als Komponente A,
B) 0 - 10 Gew.-% eines Pfropfpolymers als Komponente B umfassend:
   B1: eine Pfropfgrundlage aufgebaut aus einem Acrylsäurealkylester, einem Allyl(meth)acrylat, einem copolymerisierbaren Monomer und/oder einem Dien-Monomer,
   B2: mindestens eine Pfropfhülle aufgebaut aus mindestens einem vinylaromatischen Monomer und/oder einem copolymerisierbaren Monomer,
C) 0,5 - 8 Gew.-% eines weiteren Copolymers als Verträglichkeitsvermittler als Komponente C,
D) 5 - 30 Gew.-%, oftmals 5 - 25 Gew.-% Formkörper F als Komponente D,
E) 0,1 - 4 Gew.-% an Stabilisator(en) als Komponente E,
wobei die Summe der Komponenten A, B, C, D und E (vorzugsweise) 100 Gew.-% ergibt. Die Polymermatrix der ersten thermoplastischen Formmasse M1 umfasst die Komponenten A, B, C und E und besteht bevorzugt aus den Komponenten A, B, C und E.

In einer bevorzugten Ausführungsform bestehen die zweite thermoplastische Formmasse M2 und die dritte thermoplastische Formmasse M3 jeweils aus den Komponenten A und C und gegebenenfalls B und gegebenenfalls E, wobei bevorzugte Zusammensetzungen der zweiten thermoplastischen Formmasse M2 und der dritten thermoplastischen Formmasse M3 den bevorzugten Zusammensetzungen der Polymermatrix der ersten thermoplastischen Zusammensetzung M1 entsprechen. In der Polymermatrix der ersten thermoplastischen Formmasse M1 ist keine Komponente D enthalten, bevorzugt ist auch in der zweiten thermoplastische Formmasse M2 und der dritten thermoplastischen Formmasse M3 keine Komponente D enthalten.

Vorzugsweise ist dabei die Komponente A ein SAN-Copolymer, die Komponente B ein Propfcopolymer aus Styrol und Acrylnitril sowie einem Polybutadien oder Acrylat-Kautschuk, und die Komponente C ein S/AN/MSA-Copolymer.

Weiter bevorzugt ist die Komponente A ein SAN-Copolymer und die Komponente C ein S/AN/MSA-Copolymer.

Bevorzugt ist die Komponente A ein Styrol-Acrylnitril-Copolymer mit einem Styrolgehalt von 65 - 76 Gew.-% und einem Acrylnitrilgehalt von 35 - 24 Gew.-%. Insbesondere kann die Komponente A ein SAN-Polymer mir einem S/AN Verhältnis von 67/33 und einer Viskositätszahl von 80 dl/g (gemessen an 0,5 %iger Lösung in DMF bei 23 °C) sein.

In einer bevorzugten Ausführungsform enthält die erste thermoplastische Formmasse M1 als Komponente E von 0,1 bis 4 Gew.-% an mindestens zwei verschiedenen Stabilisatoren. Eine Kombination von zwei (oder drei) Stabilisatoren (wie Tinuvin oder Cyasorb) hat sich als vorteilhaft erwiesen.

### Komponente A

Als Komponente A sind grundsätzlich alle dem Fachmann bekannten und in der Literatur bekannten Styrol-Acrylnitril-Copolymere einsetzbar. Im Sinne der vorliegenden Erfindung kann unter einem Styrol-Acrylnitril-Copolymer auch ein kernalkyliertes Styrol-Acrylnitril-Copolymer verstanden werden. Häufig ist Komponente A eine SAN-Matrix.

Komponente A wird in der ersten thermoplastischen Formmasse M1 bevorzugt in Mengen von mindestens 50 Gew.-%, bevorzugt von 50 Gew.-% bis 70 Gew.-% eingesetzt.

Als Monomere A1 für das Copolymer eignen sich vinylaromatische Monomere, bevorzugt Styrol und/oder Styrolderivate, bevorzugt α-Methylstyrol, und kernalkylierte Styrole, wie beispielsweise p-Methylstyrol und/oder tert.-Butylstyrol. Als Monomere A2 für das Copolymer können beispielsweise folgende Verbindungen Verwendung finden: Acrylnitril.

Die Herstellung von der Komponente A kann nach allgemein bekannten Methoden, wie sie z.B. in DE-A 31 49 358, Seite 9, Zeilen 18 bis 32 und DE-A 32 27 555, Seite 9, Zeilen 18 bis 32 beschrieben sind, durchgeführt werden, beispielsweise durch allgemein bekannte Copolymerisation von A1, A2 und gegebenenfalls weiteren, copolymerisiserbaren Monomeren in Masse, Lösung, Suspension oder wässriger Emulsion bei üblichen Temperaturen und Drücken in bekannten Apparaturen wie beispielsweise beschrieben in Kunstsoff-Handbuch, Vieweg-Daumiller, Band V (Polystyrol), Carl-Hanser-Verlag, München 1969, S. 124, Z. 12 ff..

### Copolymer-Komponente B

Komponente B wird bevorzugt in Mengen von 0 Gew.-% bis 10 Gew.-%, mehr bevorzugt von 0,5 Gew.-% bis 10 Gew.-%, eingesetzt.

Als Monomere für die Herstellung der Grundstufe (Pfropfkern) kommen Butadien aber auch Acrylsäurealkylester mit üblicherweise 1 bis 8 Kohlenstoffatomen, besonders bevorzugt 4 bis 8 Kohlenstoffatomen im Alkylrest, insbesondere Acrylsäure-n-butylester und/oder Acrylsäureethylhexylester in Betracht. Die Acrylsäureester können bei der Herstellung der Pfropfgrundlage B1 einzeln oder in Mischung eingesetzt werden.

Als Vernetzer eignet sich Allyl(meth)acrylat, insbesondere Allylmethacrylat. Gegebenenfalls können bis zu 2 Gew.-%, bevorzugt bis 1 Gew.-% und insbesondere bis zu 0,5 Gew.-% an weiteren, copolymerisierbaren Monomeren mit mindestens zwei funktionellen Gruppen eingesetzt werden. Geeignet sind beispielsweise Monomere, die zwei oder mehr zur Copolymerisation befähigte ethylenische Doppelbindungen enthalten, die nicht in 1,3-Stellung konjugiert sind. Geeignete Vernetzungsmonomere sind beispielsweise Divinylbenzol, Diallylmaleat, Diallylfumarat und/oder Diallylphthalat, Tri-Allylcyanurat, Allyl(meth)acrylat, bevorzugt der Acrylsäureester des Tricyclodecenylalkohols und/oder Dicyclopentadienylacrylat.

Als mögliche weitere, copolymerisierbare Monomere können beispielsweise folgende Verbindungen Verwendung finden: alpha-Methylstyrol, Methacrylnitril, Methylacrylat, Ethylacrylat, Propylacrylat, Methylmethacrylat, Ethylmethacrylat, Phenylmaleinimid, Acrylamid, Vinylmethylether.

Zur Herstellung der auf die Pfropfgrundlage B1 gepfropften Hülle(n) B2 eignen sich als vinylaromatische Monomere B21 bevorzugt Styrol und/oder Styrolderivate, z.B. Styrol, Alkylstyrole, bevorzugt α-Methylstyrol, und kernalkylierte Styrole, wie z. B. p-Methylstyrol und/oder tert.-Butylstyrol.

Beispiele für polare, copolymerisierbare ungesättigte Monomere für B2 sind Acrylnitril und Methacrylnitril.

Als mögliche weitere Monomere, insbesondere copolymerisierbare Monomere, insbesondere für B2, können beispielsweise folgende Verbindungen Verwendung finden: Acrylsäure, Methacrylsäure, Maleinsäureanhydrid, Methacrylnitril, Methylacrylat, Ethylacrylat, Propylacrylat, Methylmethacrylat, Ethylmethacrylat, Phenylmaleinimid, Acrylamid, Vinylmethylether. Diese können beispielsweise allein als gepfropfte Hülle B2 dienen oder besonderes bevorzugt als Copolymer in vinylaromatischen Monomeren B21.

Des Weiteren können in der ersten thermoplastischen Formmasse M1 die üblichen Hilfs- und/oder Zusatzstoffe Verwendung finden, beispielsweise Emulgatoren, wie Alkalisalze von Alkyl- oder Alkylarylsulfonsäuren, Alkylsulfate, Fettalkoholsulfonate, Salze höherer Fettsäuren mit 10 bis 30 Kohlenstoffatomen oder Harzseifen, Polymerisationsinitiatoren wie z.B. übliche Persulfate, beispielsweise Kaliumpersulfat oder bekannte Redox-Systeme, Polymerisationshilfsstoffe wie z.B. übliche Puffersubstanzen, durch welche pH-Werte von vorzugsweise 6 bis 9 eingestellt werden, z.B. Natriumbicarbonat und/oder Natriumpyrophosphat, und/oder Molekulargewichtsregler, beispielsweise Mercaptane, Terpinole und/oder dimeres α-Methylstyrol, wobei die Molekulargewichtsregler üblicherweise in einer Menge von 0 bis 3 Gew.-%, bezogen auf das Gewicht der Reaktionsmischung, eingesetzt werden.

Die Herstellung des ASA (Acrylester-Styrol-Acrylnitril)-Werkstoffes, enthaltend die kautschukelastische Pfropfgrundlage B1 aus Acrylester-Polymerisat und die Pfropfhülle B2 aus Styrol/Acrylnitril Copolymerisat, ist allgemein aus der Fachliteratur bekannt und beispielhaft in DE-A 12 60 135, Seiten 3 bis 4, Zeilen 13 bis 23 und US 3,055,859, Seiten 2 bis 4, Zeilen 62 bis 10, sowie für die Pfropfung in zwei Stufen in DE-A 31 49 358, Seiten 6 bis 8, Zeilen 16 bis 5 und DE-A 32 27 555, Seiten 6 bis 8, Zeilen 16 bis 5 beschrieben. Dabei kann zunächst das als Pfropfgrundlage A21 dienende kautschukartige Acrylsäureester-Polymerisat z.B. durch Emulsionspolymerisation von A211 hergestellt werden, indem man beispielsweise A211 und den mindestens bifunktionellen Vernetzer, beispielsweise in wässriger Emulsion, in an sich bekannter Weise bei Temperaturen zwischen 20 und 100 °C, vorzugsweise zwischen 50 und 80 °C polymerisiert. Auf diesen dabei entstehenden Polyacrylsäureester-Latex kann ein Gemisch von vinylaromatischen Monomeren A221 mit einem polaren, copolymerisierbaren ungesättigten Monomeren A222 sowie gegebenenfalls A223 aufgepfropft werden, wobei die Pfropfmischpolymerisation ebenfalls vorzugsweise in wässriger Emulsion durchgeführt wird.

Die kautschukelastische Komponente B1 kann auch, wie in EP 534,212 B1, Seiten 4 bis 5, Zeilen 46 bis 43 beschrieben, auf einen harten, gegebenenfalls mit den unter A1 genannten Monomeren vernetzten Pfropfkern, der aus den für A1 genannten Monomeren aufgebaut ist, aufgepfropft werden. Vorzugsweise handelt es sich dabei um einen harten Pfropfkern mit einer Glasübergangstemperatur Tg > 25 °C, wobei der Anteil des Pfropfkerns wie bereits dargestellt 5 bis 50 Gew.-%, bezogen auf das Gewicht von A1 beträgt.

Alternativ kann die kautschukelastische Grundlage B1 aus Dien-Monomeren bestehen, wobei bevorzugt Butadien und Isopren, insbesondere Butadien, eingesetzt wird, gegebenenfalls in Verbindung mit weiteren Monomeren wie Styrol.

In einer weiteren besonders bevorzugten Ausführungsform kann die Pfropfung gemäß DE-A 31 49 358, Seiten 6 bis 8, Zeilen 16 bis 5 bzw. DE-A 32 27 555, Seiten 6 bis 8, Zeilen 1 bis 5 in zwei Stufen erfolgen, wobei zuerst das vinylaromatische Monomer in Gegenwart der Pfropfgrundlage polymerisiert werden kann. In der zweiten Stufe kann dann die Pfropfmischpolymerisation mit einem Gemisch enthaltend mindestens ein vinylaromatische Monomer und mindestens polares, copolymerisierbares Monomer durchgeführt werden. Die eingesetzten und in den ASA-Werkstoffen enthaltenen Mengen der verschiedenen Komponenten sind bereits eingangs beschrieben worden.

Zur Erzielung von ASA-Werkstoffen mit guten mechanischen Eigenschaften ist der als Pfropfgrundlage dienende Polyacrylsäureester vernetzt, d. h. seine Herstellung durch Polymerisation von Acrylsäureestern erfolgt in Gegenwart von mindestens bifunktionellen, vernetzend wirkenden Monomeren.

Vorzugsweise kann die erste thermoplastische Formmasse M1 0,5 Gew.-% bis 10 Gew.-% mindestens eines Pfropfpolymers als Komponente B enthalten, bestehend aus:
a) 10 Gew.-% bis 90 Gew.-% Pfropfgrundlage B1 aus (teil)-vernetztem Polybutadien- oder Polyacrylat
b) 90 Gew.-% bis 10 Gew.-% einer oder mehrerer Pfropfauflagen B2 aus Styrol, Acrylnitril und gegebenenfalls weiteren Monomeren wie Methacrylsäuremethylester (MMA).

In einer weiteren Ausgestaltung können der ersten thermoplastischen Formmasse M1 zur Verbesserung der mechanischen Eigenschaften bis zu 10 Gew % eines oder mehrerer Komponenten B als Schlagzähmodifikator hinzugefügt werden. Insbesondere kann die Komponente B zumindest teilweise die Komponente A in der ersten thermoplastischen Formmasse M1 ersetzen.

### Komponente C

Komponente C wird oftmals in Mengen von 0,5 Gew.-% bis 5 Gew.-%, bevorzugt von 1 Gew.-% bis 5 Gew.-% und insbesondere von 2 Gew.-% bis 5 Gew.-% eingesetzt. Die Komponente ist ein Copolymer.

Als Komponente C enthält die erste thermoplastische Formmasse M1 den Verträglichkeitsvermittler.

Besonders bevorzugt ist Komponente C ein Styrol-Acrylnitril-Maleinsäureanhydrid Terpolymer. Im Terpolymer beträgt der Anteil an Acrylnitril, bezogen auf das gesamte Terpolymer, vorzugsweise 10 Gew.-% bis 30 Gew.-%, besonders bevorzugt 15 Gew.-% bis 30 Gew.-%, insbesondere 20 Gew.-% bis 25 Gew.-%. Der verbleibende Rest entfällt auf Styrol und Maleinsäureanhydrid.

Die bevorzugt einsetzbaren Maleinsäureanhydrid-haltigen (Methyl)Styrol-Acrylnitril-Copolymere haben im Allgemeinen Molekulargewichte Mw im Bereich von 30.000 bis 500.000 g/mol, vorzugsweise von 50.000 bis 250.000 g/mol, insbesondere von 70.000 bis 200.000 g/mol, bestimmt durch GPC unter Verwendung von Tetrahydrofuran (THF) als Eluent und mit Polystyrol-Kalibrierung.

### Weitere Komponenten E

Die erste thermoplastische Formmasse M1 enthält zu 0,1 bis 4 Gew.-% an Stabilisatoren als mindestens einer weiteren Komponente E. Komponente E wird bevorzugt in Mengen von 0,1 Gew.-% bis 2 Gew.-% und insbesondere von 0,1 Gew.-% bis 1,5 Gew.-% eingesetzt. Dabei kann es sich um eine einzelne Bestandteile in der Komponente oder mehrere Bestandteile in der Komponente handeln.

Die erste thermoplastische Formmasse M1 kann zusätzlich zu den Komponenten A bis D Hilfs- und/oder Zusatzstoffe enthalten. Die Hilfs- und Zusatzstoffe sind insbesondere verschieden von den Formkörpern F und verschieden von dem Verträglichkeitsvermittler. Die erste thermoplastische Formmasse M1 enthält bis 4 Gew.-% Stabilisatoren. Hilfs- und/oder Zusatzstoffe sind beispielsweise Stabilisatoren, Weichmacher, Antistatika, Lichtschutzmittel, Gleitmittel, Treibmittel, weitere verträgliche thermoplastische Kunststoffe, beispielsweise Polyester (z.B. Polyethylenterephthalat, Polybutylenterephthalat), Polycarbonat, Polyamid, Polyoxymethylen, Polystyrol, Polyethylen, Polypropylen, Polyvinylchlorid, Füllstoffe, oberflächenaktive Substanzen, Flammschutzmittel, Farbstoffe und Pigmente.

Die Stabilisatoren gegen Oxidation, Hydrolyse, Licht, Hitze oder Verfärbung sind in Mengen von 0,1 Gew.-% bis 4 Gew.-% enthalten. Oftmals sind zwei verschiedene Stabilisator-Typen enthalten.

Im Rahmen einer weiteren Ausführungsform der ersten thermoplastischen Formmasse M1, enthält die Komponente E ein Lichtschutzmittel, ein Gleitmittel und ein (medizinisches) Weißöl. Insbesondere kann die Komponente E aus mehreren Stoffen bestehen, um beispielsweise das Aussehen der Formmasse zu beeinflussen. Dazu können vorzugsweise optische Aufheller, Radikalfänger, die die durch UV-Strahlung in der Formmasse erzeugte Radikale abfangen, oder Lichtschutzmittel enthalten sein.

Gleit- und ebenfalls Entformungsmittel, die in der Regel in Mengen bis zu 1 Gew.-%, zugesetzt werden können, sind Stearinsäure, Stearylalkohol, Stearinsäurealkylester und -amide sowie Ester des Pentaerythrits mit langkettigen Fettsäuren. Es können auch Salze des Calciums, Zinks oder Aluminiums der Stearinsäure sowie Dialkylketone, z. B. Distearylketon, eingesetzt werden. Geeignet ist insbesondere Calciumstearat.

Als Lichtschutzmittel können alle üblichen Lichtschutzmittel eingesetzt werden, beispielsweise Verbindungen auf Basis von Benzophenon, Benztriazol, Zimtsäure, organischen Phosphiten und Phosphoniten sowie sterisch gehinderte Amine.

Als Gleitmittel kommen beispielsweise Kohlenwasserstoffe wie Öle, Paraffine, PE-Wachse, PP-Wachse, Fettalkohole mit 6 bis 20 Kohlenstoffatomen, Ketone, Carbonsäuren wie Fettsäuren, Montansäure oder oxidiertes PE-Wachs, Carbonsäureamide sowie Carbonsäureester, z.B. mit den Alkoholen, Ethanol, Fettalkoholen, Glycerin, Ethandiol, Pentaerythrit und langkettigen Carbonsäuren als Säurekomponente in Betracht.

Als Stabilisatoren können übliche Antioxidantien, beispielsweise phenolische Antioxidantien, z. B. alkylierte Monophenole, Ester und/oder Amide der b-(3,5-di-tertierbutyl-4-hydroxyphenyl-propionsäure und/oder Benztriazole eingesetzt werden. Beispielhaft sind mögliche Antioxidantien in EP-A 698637 und EP-A 669367 erwähnt. Konkret kann man als phenolische Antioxidantien 2,6-Ditertierbutyl-4-methylphenol, Pentaerythrityl-tetrakis-[3-(3,5-ditertiärbutyl-4-hydroxyphenyl)-propionat und N,N'-Di-(3,5-ditertiärbutyl-4-hydroxyphenyl-propionyl)-hexamethylendiamin erwähnen. Die genannten Stabilisatoren können einzeln oder in Mischungen verwendet werden. Als besonders geeignet hat sich der Stabilisator Tinuvin 770 erwiesen, oftmals in Kombination mit einem weiteren Stabilisator (siehe experimenteller Teil). Tinuvin 770 ist ein nieder-molekularer Dicarbonsäureester mit dem systematischen Namen: Decanedioicacid-bis-(2,2,6,6-tetramethyl-4-piperidinyl)-ester. Geeignet in Kombination ist z. B. Cyasorb UV-3853 (siehe Hostavin N845N), eine Mischung von niedermolekularen Fettsäureestern mit einem heterocyclischen Alkohol (C₁₂₋₂₁ und C₁₈-unsaturated-2,2,6,6-tetramethyl-4-piperidinyl ester). Geeignet ist auch Chimassorb 944 (HALS-HS-944), ein Gemisch oligomerer HALS-Stabilisatoren mit der Summenformel (C₃₅H₆₈N₈)ₙ mit verschiedenen Kettenlängen (Poly[[6-[(1,1,3,3-tetramethylbutyl)amino]-s-triazine-2,4-diyl]-[(2,2,6,6-tetramethyl-4-piperidyl)imino]-hexamethylene-[(2,2,6,6-tetramethyl-4-piperidyl)imino]). Die erste thermoplastische Formmasse M1 wird bevorzugt durch eine Schmelzvermischung der Komponenten A, B, C und D und E hergestellt.

In einer weiteren Ausführungsform werden die Komponenten A, C, D, E und gegebenenfalls B compoundiert. Dabei kann eine Compoundierung (Kunststoffaufbereitung) durch Beimischung von Zuschlagstoffen (Füllstoffe, Additive usw.) zur gezielten Optimierung der Eigenschaftsprofile durchgeführt werden. Insbesondere kann die Komponente E dazu verwendet werden.

Die Komponenten A, B, C und D können gleichzeitig oder nacheinander verwendet werden. Nacheinander bedeutet in Sinne der vorliegenden Erfindung, dass beispielsweise zuerst zwei Komponenten vermischt werden und danach die weiteren Komponenten hinzugefügt werden. Die Compoundierung erfolgt überwiegend in Extrudern (hauptsächlich gleichläufige Doppelschneckenextruder, aber auch gegenläufige Doppelschneckenextruder und Ko-Kneter) und umfasst die Verfahrensoperationen Fördern, Aufschmelzen, Dispergieren, Mischen, Entgasen und Druckaufbau.

Weiterhin wird ein Verfahren zur Herstellung des erfindungsgemäßen Bauteils bereitgestellt, wobei der Kern K, die Beschichtung G und gegebenenfalls die weitere Schicht S mittels Spritzguss hergestellt werden. Neben Spritzgießen kommen im Allgemeinen auch Extrusion, Kalandrieren und Walzen zur Herstellung des Bauteils in Frage.

Das erfindungsgemäße Bauteil kann hergestellt werden, indem zunächst der Kern K erzeugt wird, auf den dann in einem folgenden Schritt die Beschichtung G und dann gegebenenfalls in einem weiteren Schritt die weitere Schicht S aufgebracht wird. Die Beschichtung G und die weitere Schicht S können auch gleichzeitig auf den Kern K mittels Spritzguss aufgebracht werden.

In einer alternativen Ausführungsform ist es möglich, den Kern K und die Beschichtung G und gegebenenfalls auch die weitere Schicht S simultan in eine Kavität einzuspritzen und somit den Kern K, die Beschichtung G und gegebenenfalls die weitere Schicht S gleichzeitig zu erzeugen und so das Bauteil herzustellen. Die gleichzeitige Herstellung des Kerns K, der Beschichtung G und gegebenenfalls der weiteren Schicht S ist beispielsweise mittels Mehrkomponenten-Spritzgießverfahren möglich. Mehrkomponenten-Spritzgießverfahren sind zum Beispiel in W. Michaeli, et al., in Technologie des Spritzgießens, Carl Hansa Verlag, München, 2009, ab Seite 78 beschrieben.

Die Erfindung wird nachfolgend mit Bezugnahme auf die Zeichnungen näher erläutert.

Es zeigen:
- Figur 1: einen Ausschnitt aus einem Bauteil gemäß dem Stand der Technik,
- Figur 2: einen Ausschnitt aus einem erfindungsgemäßen Bauteil und
- Figur 3: einen Ausschnitt aus einem erfindungsgemäßen Bauteil mit einer weiteren Schicht S.

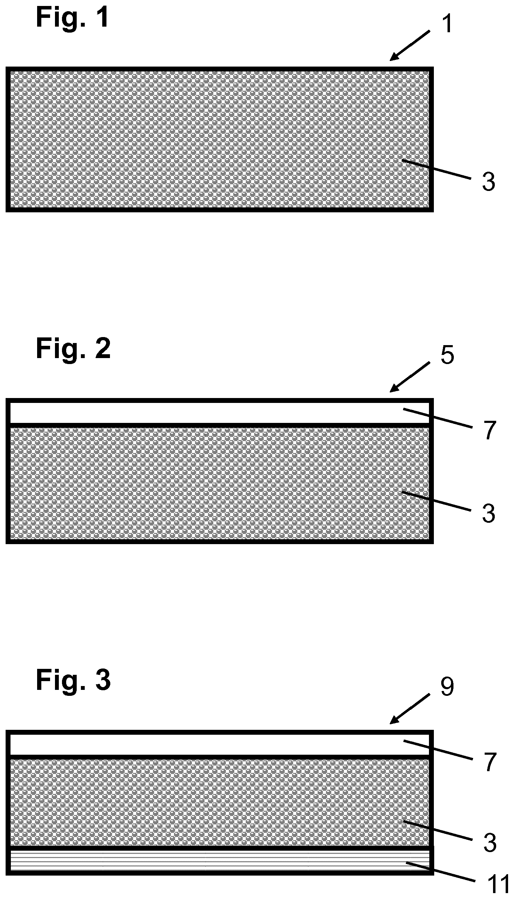

In Figur 1 ist ein Ausschnitt eines Bauteils 1 gemäß dem Stand der Technik dargestellt. Das Bauteil 1 kann beispielsweise eine Mittelkonsole im Innenraum eines Fahrzeugs sein.

Das Bauteil 1 besteht vollständig aus der ersten thermoplastischen Formmasse M1, die Glaskugeln als Formkörper F enthält, und besteht somit ausschließlich aus einem Kern K 3. Die in der ersten thermoplastischen Formmasse M1 enthaltenen Glaskugeln weisen in ihrem Inneren einen Hohlraum auf.

Figur 2 zeigt einen Ausschnitt eines erfindungsgemäßen Bauteils 5, das einen Kern K 3, bestehend aus der ersten thermoplastischen Formmasse M1, sowie eine Beschichtung G 7, bestehend aus einer zweiten thermoplastischen Formmasse M2, besitzt. Die zweite thermoplastische Formmasse M2 enthält im Gegensatz zur ersten thermoplastischen Formmasse M1 keine Glaskugeln. In diesem Ausführungsbeispiel befindet sich die Beschichtung G 7 lediglich auf einer Seite des Bauteils 5. Im Vergleich zum in Figur 1 dargestellten Bauteil 1 gemäß dem Stand der Technik wurde ein Teil der ersten thermoplastischen Formmasse M1 durch die zweite thermoplastische Formmasse M2 ersetzt. Alternativ kann die Beschichtung G 7 und somit die zweite thermoplastische Formmasse M2 auch zusätzlich beispielsweise auf das bereits gefertigte Bauteil 1 gemäß dem Stand der Technik aufgebracht werden.

Figur 3 zeigt einen Ausschnitt eines erfindungsgemäßen Bauteils 9, das einen Kern K 3, bestehend aus der ersten thermoplastischen Formmasse M1, eine Beschichtung G 7, bestehend aus der zweiten thermoplastischen Formmasse M2, und eine weitere Schicht S 11, bestehend aus der dritten thermoplastischen Formmasse M3, umfasst. Die Beschichtung G 7 und die weitere Schicht S 11 sind auf gegenüberliegenden Seiten des Kerns K 3 auf dem Bauteil 9 angeordnet. Weder die zweite thermoplastische Formmasse M2 noch die dritte thermoplastische Formmasse M3 enthält Glaskugeln. Die Zusammensetzung der zweiten thermoplastischen Formmasse M2 weicht hier von der Zusammensetzung der dritten thermoplastischen Formmasse M3 ab, so dass auf unterschiedlichen Seiten des Kerns K 3 verschiedene Oberflächenbeschaffenheiten erzielt werden können.

Der massenbezogene Anteil der ersten thermoplastischen Formmasse M1 an dem Bauteil 9 ist hier größer als der massenbezogene Anteil der zweiten thermoplastischen Formmasse M2 und der dritten thermoplastischen Formmasse M3 an dem Bauteil 9 zusammen. Gleiches gilt auch für die volumenbezogenen Anteile. In diesem Ausführungsbeispiel ist sowohl die Dicke der Beschichtung G 7 als auch die Dicke der weiteren Schicht S 11 konstant. Die Dicken der Beschichtung G 7 und der weiteren Schicht S 11 können alternativ auch entsprechend der Form des Kerns K 3 oder auch unabhängig von der Form des Kerns K 3 variieren, um beispielsweise ein gewünschtes Relief auf der Oberfläche des Bauteils 9 zu erzeugen.

### Beispiel

Es wird ein 10 cm x 10 cm x 1,5 cm große Platte als Bauteil hergestellt aus einem thermoplastischen Styrol-Copolymer-Verbundmaterial, enthaltend einen thermoplastischen Kern K (85 Gew.-% des Bauteils) und einer Polymer-Beschichtung G (15 Gew.% des Bauteils), wobei die Beschichtung G den Kern K vollständig umschließt. Der Kern K wird aus 75 Gew.-% eines handelsüblichen thermoplastischen SAN-Copolymer M1 (Hersteller Styrolution, Frankfurt) hergestellt, wobei diese thermoplastische Formmasse M1 25 Gew.-% an Formkörper F (Glashohlkugeln mit einem mittleren Außendurchmesser von 0,4 mm und eine mittlere Wandstärke von 0,08 mm) enthält. Die dünne Beschichtung G des Bauteils wird aus einer thermoplastischen Formmasse aus ABS-Copolymer (Terluran GP-35) erstellt und auf den Kern aufgebracht.

## Patentansprüche

1. Bauteil aus thermoplastischem Verbundmaterial, enthaltend einen Kern K und mindestens eine Beschichtung G, wobei:
die Beschichtung G zumindest teilweise den Kern K umschließt,
der Kern K aus einer ersten thermoplastischen Formmasse M1 hergestellt ist,
wobei
die erste thermoplastische Formmasse M1 mehrere Formkörper F enthält, und die Beschichtung G aus einer zweiten thermoplastischen Formmasse M2 hergestellt ist,
die Dicke des Kerns K um einen Faktor von mindestens 1,2 und nicht mehr als 20 größer ist als die Dicke der Beschichtung G, wobei jeweils die größte Dicke, bezogen auf das gesamte Bauteil, anzunehmen ist;
die Formkörper F Hohlkörper sind und insbesondere ein Verhältnis des mittleren Außendurchmessers der Formkörper F zur mittleren Wandstärke der Formkörper F von 2,05 bis 10 aufweisen;
die zweite thermoplastische Formmasse M2 eine höhere Kerbschlagfestigkeit (DIN EN ISO 179-1) aufweist als die erste thermoplastische Formmasse M1;
die Dichte der ersten thermoplastischen Formmasse M1 von 0,7 bis 1 g/cm³ beträgt, und die thermoplastische Formmasse M1 enthält:
A) mindestens 50 Gew.-% eines Styrol-Acrylnitril-Copolymers als Komponente A,
B) 0 - 10 Gew.-% eines Pfropfpolymers als Komponente B umfassend: B1: eine Pfropfgrundlage aufgebaut aus einem Acrylsäurealkylester, einem Allyl(meth)acrylat, einem copolymerisierbaren Monomer und/oder einem Dien-Monomer, B2: mindestens eine Pfropfhülle aufbaut aus mindestens einem vinylaromatischen Monomer und/oder einem copolymerisierbaren Monomer,
C) 0,5 - 8 Gew.-% eines weiteren Copolymers als Verträglichkeitsvermittler als Komponente C,
D) 5 - 30 Gew.-%, oftmals 5 - 25 Gew.-% Formkörper F als Komponente D,
E) 0,1 bis 4 Gew.-% an Stabilisator(en) als Komponente E;
wobei die Summe der Komponenten A, B, C, D und E 100 Gew.-% ergibt.

2. Bauteil nach Anspruch 1, **dadurch gekennzeichnet, dass** die Formkörper F zu mindestens 60 Gew.-% aus Glas bestehen, bezogen auf die Masse der Formkörper F.

3. Bauteil nach Anspruch 1oder 2, **dadurch gekennzeichnet, dass** die Formkörper F kugelförmig sind.

4. Bauteil nach einem der Ansprüche 1 bis 3, **dadurch gekennzeichnet, dass** die längste räumliche Ausdehnung der Formkörpern F in einem Bereich von 1 µm bis 1000 µm liegt.

5. Bauteil nach einem der Ansprüche 1 bis 4, **dadurch gekennzeichnet, dass** die die thermoplastische Formmasse M1 aus den Komponenten A, B, C, D und E besteht.

6. Bauteil nach einem der Ansprüche 1 bis 5, **dadurch gekennzeichnet, dass** die Beschichtung G eine Folie, eine Platte oder ein zweites Bauteil ist, insbesondere eine Folie.

7. Bauteil nach einem der Ansprüche 1 bis 6, **dadurch gekennzeichnet, dass** die erste thermoplastische Formmasse M1 aus einer Polymermatrix und den Formkörpern F besteht und die Polymermatrix der ersten thermoplastischen Formmasse M1 und die zweite thermoplastische Formmasse M2 eine identische Zusammensetzung aufweisen.

8. Bauteil nach einem der Ansprüche 1 bis 7, **dadurch gekennzeichnet, dass** das Bauteil zusätzlich eine weitere Schicht S umfasst, die aus einer dritten thermoplastischen Formmasse M3 aufgebaut ist, die eine höhere Kerbschlagfestigkeit aufweist als die erste thermoplastische Formmasse M1, wobei der Kern K zwischen der Beschichtung G und der weiteren Schicht S angeordnet ist.

9. Bauteil nach einem der Ansprüche 1 bis 8, **dadurch gekennzeichnet, dass** die Beschichtung G in direktem Kontakt zu dem Kern K angeordnet ist und gegebenenfalls die weitere Schicht S in direktem Kontakt zu dem Kern K angeordnet ist.

10. Bauteil nach einem der Ansprüche 1 bis 9, **dadurch gekennzeichnet, dass** die Beschichtung G und gegebenenfalls die weitere Schicht S eine äußere Oberfläche des Bauteils bilden.

11. Bauteil nach einem der Ansprüche 1 bis 10, **dadurch gekennzeichnet, dass** die erste thermoplastische Formmasse M1 mindestens 50 Gew.-% eines Kautschuk-modifizierten Styrol-Acrylnitril-Copolymers enthält, wobei die Kautschuk-Komponente auf einem Acrylat-Kautschuk oder auf einem Polybutadien (PB) basiert.

12. Bauteil nach Anspruch1 oder 11, **dadurch gekennzeichnet, dass** der Verträglichkeitsvermittler mindestens ein Styrol-Acrylnitril-Maleinsäureanhydrid-Copolymer umfasst, wobei dieses 0,5 Gew.-% bis 30 Gew.-% von Maleinsäureanhydrid abgeleiteten Einheiten aufweist.

13. Verfahren zur Herstellung eines Bauteils nach einem der Ansprüche 1 bis 12, wobei der Kern K, die Beschichtung G und gegebenenfalls die weitere Schicht S mittels Spritzguss hergestellt werden.

## Claims

1. A component made of thermoplastic composite material, comprising a core K and at least one coating G, where:
the coating G at least to some extent encloses the core K,
the core K has been produced from a first thermoplastic molding composition M1,
where
the first thermoplastic molding composition M1 comprises a plurality of moldings F, and
the coating G has been produced from a second thermoplastic molding composition M2,
the thickness of the core K is greater by a factor of at least 1.2 and at most 20 than the thickness of the coating G, where in each case the value to be adduced is the greatest thickness, based on the entire component;
the moldings F are hollow bodies and in particular have a ratio of the average external diameter of the moldings F to the average wall thickness of the moldings F of from 2.05 to 10;
the notched impact resistance (DIN EN ISO 179-1) of the second thermoplastic molding composition M2 is higher than that of the first thermoplastic molding composition M1;
the density of the first thermoplastic molding composition M1 is from 0.7 to 1 g/cm³, and the thermoplastic molding composition M1 comprises:
A) at least 50% by weight of a styrene-acrylonitrile copolymer as component A,
B) from 0 to 10% by weight of a graft polymer as component B comprising:
B1: a graft base composed of an alkyl acrylate, an allyl (meth)acrylate, a copolymerizable monomer and/or a diene monomer,
B2: at least one graft shell composed of at least one vinylaromatic monomer and/or one copolymerizable monomer,
C) from 0.5 to 8% by weight of another copolymer as compatibilizer as component C,
D) from 5 to 30% by weight, often from 5 to 25% by weight, of moldings F as component D,
E) from 0.1 to 4% by weight of stabilizer(s) as component E;
where the entirety of components A, B, C, D and E provides 100% by weight.

2. The component as claimed in claim 1, **characterized in that**, based on the composition of the moldings F, at least 60% by weight of said moldings consists of glass.

3. The component as claimed in claim 1 or 2, **characterized in that** the moldings F are spherical.

4. The component as claimed in any of claims 1 to 3, **characterized in that** the longest spatial dimension of the moldings F is in the range from 1 µm to 1000 µm.

5. The component as claimed in any of claims 1 to 4, **characterized in that** the the thermoplastic molding composition M1 consists of the components A, B, C, D and E.

6. The component as claimed in any of claims 1 to 5, **characterized in that** the coating G is a film, a sheet or a second component, in particular a film.

7. The component as claimed in any of claims 1 to 6, **characterized in that** the first thermoplastic molding composition M1 consists of a polymer matrix and of the moldings F, and the composition of the polymer matrix of the first thermoplastic molding composition M1 and of the second thermoplastic molding composition M2 is identical.

8. The component as claimed in any of claims 1 to 7, **characterized in that** the component additionally comprises a further layer S which is composed of a third thermoplastic molding composition M3 which has higher notched impact resistance than the first thermoplastic molding composition M1, where the core K is arranged between the coating G and the further layer S.

9. The component as claimed in any of claims 1 to 8, **characterized in that** the coating G is arranged in direct contact with the core K and, if present, the further layer S is arranged in direct contact with the core K.

10. The component as claimed in any of claims 1 to 9, **characterized in that** the coating G and, if present, the further layer S form an exterior surface of the component.

11. The component as claimed in any of claims 1 to 10, **characterized in that** the first thermoplastic molding composition M1 comprises at least 50% by weight of a rubber-modified styrene-acrylonitrile copolymer, where the rubber component is based on an acrylate rubber or on a polybutadiene (PB).

12. The component as claimed in claim 1 or 11, **characterized in that** the compatibilizer comprises at least one styrene-acrylonitrile-maleic anhydride copolymer, where this has from 0.5% by weight to 30% by weight of maleic-anhydride-derived units.

13. A process for the production of a component as claimed in any of claims 1 to 12, where the core K, the coating G and, if present, the further layer S are produced by means of injection molding.

## Revendications

1. Pièce en un matériau composite thermoplastique, contenant un noyau K et au moins un revêtement G, dans laquelle :
le revêtement G entoure au moins partiellement le noyau K,
le noyau K est fabriqué à partir d'un premier mélange à mouler thermoplastique M1,
le premier mélange à mouler thermoplastique M1 contenant plusieurs objets moulés F, et le revêtement G étant fabriqué à partir d'un deuxième mélange à mouler thermoplastique M2,
l'épaisseur du noyau K est au moins 1,2 fois et au plus 20 fois plus grande que l'épaisseur du revêtement G, l'épaisseur devant être adoptée étant dans chaque cas l'épaisseur la plus grande, rapportée à la pièce dans sa totalité ;
les objets moulés F sont des corps creux, et en particulier présentent un rapport du diamètre extérieur moyen des objets moulés F à l'épaisseur moyenne de paroi des objets moulés F de 2,05 à 10 ;
le deuxième mélange à mouler thermoplastique M2 présente une résistance au choc sur barreau entaillé (DIN EN ISO 179-1) plus grande que le premier mélange à mouler thermoplastique M1 ;
la masse volumique du premier mélange à mouler thermoplastique M1 est de 0,7 à 1 g/cm³, et le mélange à mouler thermoplastique M1 contient :
A) au moins 50 % en poids d'un copolymère styrène-acrylonitrile, en tant que composant A,
B) 0 à 10 % en poids d'un polymère greffé, en tant que composant B, comprenant :
B1 : une base de greffage, constituée d'un ester alkylique de l'acide acrylique, d'un (méth)acrylate d'allyle, d'un monomère copolymérisable et/ou d'un diène monomère,
B2 : au moins une enveloppe de greffage, constituée d'au moins un monomère vinylaromatique et/ou d'un monomère copolymérisable,
C) 0,5 à 8 % en poids d'un copolymère supplémentaire, en tant que promoteur de compatibilité, en tant que composant C,
D) 5 à 30 % en poids, souvent 5 à 25 % en poids d'un objet moulé F, en tant que composant D,
E) 0,1 à 4 % en poids d'un ou plusieurs stabilisants, en tant que composant E ;
la somme des composants A, B, C, D et E faisant 100 % en poids.

2. Pièce selon la revendication 1, **caractérisée en ce que** les objets moulés F sont à raison d'au moins 60 % en poids, par rapport à la masse des objets moulés F, constitués de verre.

3. Pièce selon la revendication 1 ou 2, **caractérisée en ce que** les objets moulés F sont sphériques.

4. Pièce selon l'une des revendications 1 à 3, **caractérisée en ce que** l'extension spatiale la plus longue des objets moulés F est comprise dans la plage de 1 µm à 1000 µm.

5. Pièce selon l'une des revendications 1 à 4, **caractérisée en ce que** le mélange à mouler thermoplastique M1 est constitué des composants A, B, C, D et E.

6. Pièce selon l'une des revendications 1 à 5, **caractérisée en ce que** le revêtement G est une feuille, une plaque ou une deuxième pièce, en particulier une feuille.

7. Pièce selon l'une des revendications 1 à 6, **caractérisée en ce que** le premier mélange à mouler thermoplastique M1 est constitué d'une matrice polymère et des objets moulés F, et la matrice polymère du premier mélange à mouler thermoplastique M1 et le deuxième mélange à mouler thermoplastique M2 présentent une composition identique.

8. Pièce selon l'une des revendications 1 à 7, **caractérisée en ce que** la pièce comprend en outre une couche supplémentaire S, qui est constituée d'un troisième mélange à mouler thermoplastique M3, qui présente une résistance au choc sur barreau entaillé plus grande que le premier mélange à mouler thermoplastique M1, le noyau K étant disposé entre le revêtement G et la couche supplémentaire S.

9. Pièce selon l'une des revendications 1 à 8, **caractérisée en ce que** le revêtement G est disposé en contact direct avec le noyau K, et éventuellement la couche supplémentaire S est disposée en contact direct avec le noyau K.

10. Pièce selon l'une des revendications 1 à 9, **caractérisée en ce que** le revêtement G et éventuellement la couche supplémentaire S forment une surface extérieure de la pièce.

11. Pièce selon l'une des revendications 1 à 10, **caractérisée en ce que** le premier mélange à mouler thermoplastique M1 contient au moins 50 % en poids d'un copolymère styrène-acrylonitrile modifié par un caoutchouc, le composant caoutchouc étant à base d'un caoutchouc acrylate ou d'un polybutadiène (PB).

12. Pièce selon la revendication 1 ou 11, **caractérisée en ce que** le promoteur de compatibilité comprend au moins un copolymère styrène-acrylonitrile-anhydride maléique, ce dernier présentant 0,5 % en poids à 30 % en poids de motifs dérivant de l'anhydride maléique.

13. Pièce de fabrication d'une pièce selon l'une des revendications 1 à 12, dans laquelle le noyau K, le revêtement G et éventuellement la couche supplémentaire S sont fabriqués par moulage par injection.
